# EUROPEAN PATENT SPECIFICATION

(11) **EP 0 566 893 B1**
(45) Date of publication and mention of the grant of the patent: **20.05.1998**
(21) Application number: 93104965.4
(22) Date of filing: 25.03.1993
(51) Int. Cl.: H04Q 7/38

(54) **Tracking of mobile stations in wireless networks**
Ortung mobiler Stationen in drahtlosen Netzwerken
Localisation de stations mobiles dans des réseaux sans fils

(30) Priority: 20.04.1992 US 871253; 20.04.1992 US 871252
(43) Date of publication of application: 27.10.1993
(73) Proprietor: International Business Machines Corporation, Armonk, N.Y. 10504 (US)
(72) Inventor: Bar-Noy, Amotz, Bronx, New York 10463 (US); Kessler, Ilan, Bronx, New York 10463 (US)
(74) Representative: Schäfer, Wolfgang, Dipl.-Ing.

(56) References cited:
- EP-A- 0 236 194
- WO-A-85/00494
- US-A- 4 608 711
- US-A- 4 737 978
- US-A- 4 843 622

## Description

This invention relates to a method of tracking the location of mobile stations in a cellular network, and especially those having non-uniform traffic distribution over the geographical area of the network.

Cellular mobile communications are exploding throughout the world, and are now an established part of many communications networks. Future mobile wireless networks are at present a topic of intense interest for research and development.

A cellular architecture is a hierarchical structure that consists of two levels: a level consisting of mobile units and a level comprising fixed stationary base stations. The mobile units are the devices that are used by the mobile stations in order to communicate with the fixed network as well as to communicate with each other. The base stations are fixed devices that on one side communicate with the mobile units through wireless links, and on the other side are connected to the fixed network by wired links. The collection of base stations together with the fixed network form a wired backbone of the wireless network. Associated with each base station, there is a geographic area, called cell, within which a mobile unit can communicate with this base station. In order to cover the entire area and to insure continuity of communications, cells must overlap. Structure, methods, and techniques of cellular networks are described in detail in William Lee: "Mobile Cellular Telecommunications Systems," New York, McGraw-Hill, 1989.

The mobile stations of a cellular network move continually within the geographic area covered by the network. Whenever there is a need to communicate with a station, the communication is established via the base station that is associated with the cell in which the mobile station is currently located. The problem is that the location of any particular mobile station may not be known at a time when there is a need to communicate with it. A possible solution to this problem is to force each mobile station to transmit an update message whenever it moves to a new cell. This solution is used by Ericsson for its Mobitex network, which is described in the Proceedings of IBM Wireless Communications Symposium, Raleigh, N. Carolina, April 22-26, 1991, and which is also described in K. Natarajan: "Distributed Algorithms for Keeping Track of Mobile Users in a Wireless Network System with Multiple Overlapping Cells", USP 5,162,534. However, as this solution implies many transmissions of updating messages, it is too expensive for networks in which there are a large number of highly mobile stations and very small cells, and also for networks in which transmission of the mobile units are very costly.

Examples of networks that possess the above two properties are indoor mobile wireless networks. In these networks, the typical size of a cell can be the size of an office. For example, if the physical channel is based on infrared technology, then the line-of-sight requirement makes it impossible to have cells that are larger than the size of a room. In addition, in such networks the mobile units are hand-held and therefore operate on batteries. This implies a power budget limitation which makes transmissions very costly (transmission consumes much more energy than any other operation).

Another possible solution to the above problem is that mobile users never update the system regarding their locations. Clearly, this solution avoids the problem of too many updating transmissions. However, adopting this solution implies that whenever there is a need to communicate with a particular user, a network-wide search for that mobile station is performed. Such a search is again a very expensive operation.

Thus, there are two basic operations involved in tracking mobile users, namely, update and find. With each of these operations there is a certain cost associated. The two extreme solutions described above demonstrate the fact that decreasing one of these two costs necessitates increasing the other one. In other words, the more updating messages that are sent by the mobile users, the less the system has to search for the users, and vice versa.

A basic problem is the design of a scheme for tracking mobile stations which has a low total cost per user. The problem addressed by this invention is the design of an efficient scheme, i.e. a scheme with a low total cost, for tracking mobile users.

There are tracking schemes in the prior art which are neither one or the two extreme solutions described above. One scheme is described in USP 4,456,793. The mechanism described in this patent is based on periodical polling of the mobile stations by the cellular system. However, there is no attempt to optimize the above cost per user or total. cost. Another scheme is described in USP 4,775,999. In this patent, the entire network is partitioned into paging areas, each of which consists of a number of cells. The mobile stations send an update message only when moving from one paging area to another (the only exception to this rule is that mobile stations transmit an update message at least once a day). The paging areas in this scheme are given, and are not subject to design. Thus, no attempt to optimize the cost per mobile station or in total is made.

USP 4,737,978 describes another scheme for tracking a mobile station in a cellular wireless network. With this scheme, reporting is a function of time and not a function of mobile station movements in the network. This scheme also assumes that the partitioning of the network into searching areas is given, and there is no attempt to optimize searching areas to adapt to mobile station movements.

Another scheme is presented, where a static strategy for tracking mobile stations is suggested. In this strategy, a subset of all base stations of the network is selected, and all base stations belonging to this subset are designated as reporting centers. Each mobile station sends an update message only when it enters a cell whose base station is a reporting center. Whenever there is a need to communicate with a user, this mobile station is searched for in the vicinity of the cell in which the mobile station last reported. This strategy optimizes the global total cost, but this strategy is designed for cellular networks having certain cells with high density traffic.

USP 4,921,464 to Ito et al describes a searching scheme designed to reduce average consumed current in a receive search mode. With this invention, in the receive ready mode, priority channels are intermittently subjected to a receive search. In other periods than the receive search periods, no power is supplied to the receive circuit of each station and unit.

US Patent 4,723,266 to Perry discloses a method of reducing the number of control channels when cell splitting takes place. The solution disclosed is to set up each call in the original large cell and then to handoff the call to one of the new smaller cells.

US Patent 4,843,622 to Yotsutani et al. discloses a method of searching over the entire network for a specific mobile unit. This searching is done according to some predetermined order among the given zones, where the essence of the method is to search simultaneously in non-overlapping zones (cells). The patent mentions update messages that are sent from mobiles to base stations; however, it does not specify any rules regarding when such messages are to be sent.

### Summary of the Invention

It is an object of this invention to provide for a flexible searching method that is dynamically adaptive to mobile station movements in a cellular network. It is also an object of this invention to provide a mobile station tracking system which allows for efficient use of available bandwidth in a cellular network having high density traffic patterns in a number of cells.

More specifically, it is an object of this invention to provide neighborhoods which dynamically change with mobile user movements in a cellular wireless network. These neighborhoods represent areas in which a mobile station is searched for when communications with the mobile station is desired.

These and other objects are solved by the present invention as layed down in enclosed independent claims.

According to a first prefered embodiment, this invention provides for an efficient method and apparatus for tracking mobile stations in a cellular wireless network. The first step involves reporting a current cell in which a mobile station is located to a base station. Second, the number of intercellular movements of the mobile station is determined. If the number of intercellular movements reaches a certain minimal value, say L, the mobile station then reports to the base station from the cell in which it is now located. This latter cell now becomes the new current cell. Third, when communications with the mobile station is desired, the user is searched for in a neighborhood of the last current cell from which the mobile station reported to the base station. This neighborhood is the set of all cells reachable from the current cell by a path of length less or equal to L, where L is the number of intercellular movements. That is, a given cell is in a neighborhood of a current cell if it is reachable from the current cell by a path which requires no more than L intercellular movements. Thus, with this invention a mobile station is searched for in part of the geographic area of a cellular wireless network where the mobile station is certain to be found.

With this invention a number of the cells of the network are selected to be reporting cells. When a mobile station enters one of the reporting cells, a reporting signal identifying the location of the mobile station is sent to a base station of the network. When communications with a mobile station is desired, the mobile station is searched for in the vicinity of the last reporting cell from which the mobile station sent its last reporting signal to the base station. The vicinity of a reporting cell is defined as the set of all cells that are reachable from the reporting cell without passing through another reporting cell.

This invention allows one to eliminate reporting signals in cells that have highly congested traffic patterns, thereby preserving bandwidth for other uses.

In the following the invention will be described in more detail in connection with embodiments shown in the drawing in which:
Fig. 1 schematically illustrates a cellular network where this invention is applied;
Fig. 2 schematically illustrates a current cell and its neighborhood;
Fig. 3 schematically illustrates the intercellular movements of three mobile stations;
Fig. 4 schematically illustrates the cells of a network with reporting cells and the vicinity of a reporting cell;
Fig. 5 illustrates the movement of a mobile station between cells of a network; and
Fig. 6 illustrate the interference graph of the network depicted in Fig. 5.

### Description of Embodiments

The description of the solution consists of three parts: In the first part, the underlying cellular system is described. In the second part a general scheme for efficiently tracking mobile users is presented, and the notions of *reporting centers* and *vicinities* are introduced. In the third part, a specific procedure for selecting the reporting centers is described.

### The System

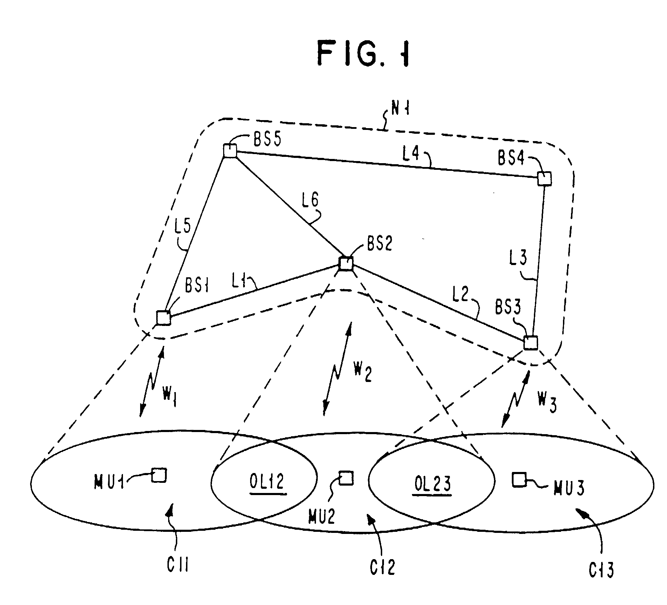

The cellular architecture is a two-level hierarchical structure (see Fig.1): a level consisting of mobile stations MU1 - MU3, and a level comprising fixed stationary base stations BS1 - BS5. The mobile stations are the devices that are used by the mobile stations in order to communicate with the fixed network N1 as well as to communicate with each other. The base stations are fixed devices that on one side communicate with the mobile stations through wireless links W1 - W3, and on the other side are connected to the fixed network by fixed links L1, ..., L6. The wireless links W1, W2, W3 can be based on any feasible technology, such as infrared or radio. The collection of base stations together with the fixed network form a wired backbone of the wireless network. Associated with each base station, there is a geographic area, referred to as a cell, within which a mobile station can communicate with that base station. For example, cell C11 is associated with base station BS1. In order to cover the entire area and to insure continuity of communications, cells must overlap. For example, cell C11 and cell C12 overlap in the area OL12, and cell C12 and cell C13 overlap in the area OL23. We assume that each base station transmits periodically a message containing its identity. By listening to these messages, a mobile user can determine with which base stations it can communicate. In particular, the mobile user can determine the quality of the communication channel to each of these base stations. For more details on cellular networks see [1].

### The Strategy

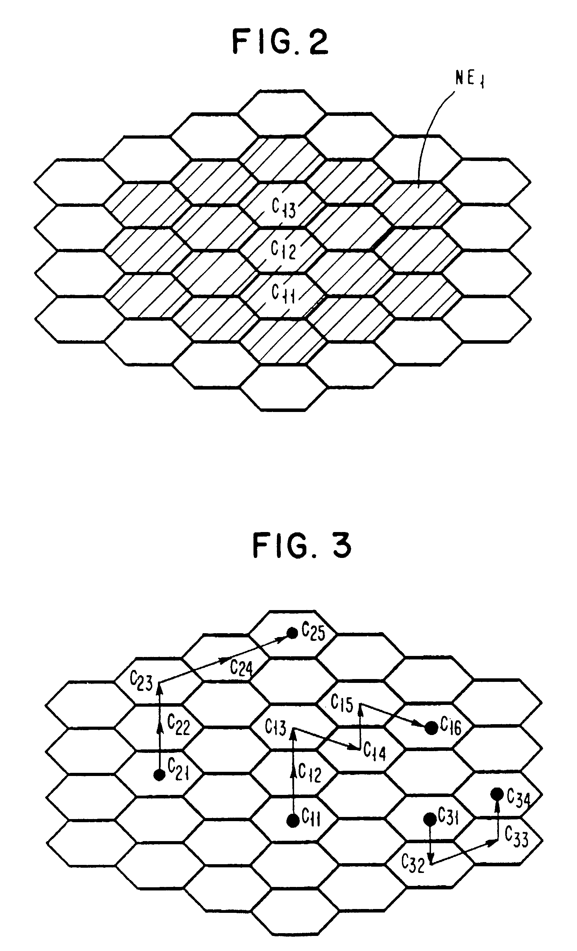

One basic strategy provided by this invention is as follows. Each mobile station maintains a counter which is incremented by one each time the location of this mobile station is changed from one cell to another. A mobile user is said to change its location from cell x of base station BX to cell y of base station BY, whenever the quality of the communication channel to BX drops below a certain level, and the quality of the communication channel to BY is the best among all base stations with which the mobile user can communicate at that time. For example, in Fig. 1, the border lines of each cell indicate the points where the quality of the communication channel to the base station of that cell drops below the above mentioned level. Associated with each mobile station there is also a parameter the value of which may be different for different users. The parameter of mobile station u is denoted by N(u). We define the L-neighborhood of cell x to be the collection of all cells that are reachable from cell x by a path of length at most L, where L is an integer ≥1. Cell x is said to be reachable from cell y by a path of length at most *L*, if there exists a sequence of cells *x* = *x*₀, *x*₁, ... , *x*_{*k*} = *y*, such that the cells *x*_{*i*} and *x*_{*i*}₊₁ are overlapping for all *i* = 0, 1, ... , *k* - 1, and *k* ≤ *L*. That is, cell *x* is in the L-neighborhood of cell *y* if *x* is reachable from *y* by a path which requires no more than L intercellular movements. For example, in Fig 2. each hexagon represents a cell, and two adjacent hexagons represent overlapping cells. In this figure, for L=2, the 2-neighborhood of cell C12 is the shaded area NE1. To see this, note that every shaded cell can be reached from cell C12 by at most two intercellular movements, while in order to reach any non-shaded cell, at least three intercellular movements are required.

When a mobile unit is first turned on, it sends an update message to the base station associated with the cell in which it is initially located, and sets its counter to zero. This cell thus becomes the current cell of this user. The rules for the update and the find operations are as follows.
- **Update**: Each time mobile station u increments its counter by one (i.e., each time mobile station u changes its location from one cell to another), it then examines the value of its counter. If the counter reached the value N(u)+1, then mobile station u transmits an update message to the base station associated with the cell in which u is currently located. The update message contains the identification of the mobile station u and the value of its parameter N(u). This cell becomes the current cell of mobile station u. Thereafter, mobile station u resets the value of its counter to zero.
- **Find**: Whenever there is a need to communicate with mobile station u, this mobile station is searched for in all cells that are in the L-neighborhood of the cell in which u last sent an update message, where L=N(u). Note that each base station knows the topology of the network and therefore each base station knows all its L-neighborhoods for any value of L.

For example, in Fig. 3 there are three mobile users, MU1-MU3. Initially, MU1 is located in cell C11, MU2 is located in cell C21, and MU3 is located in cell C31. All three mobile stations are turned on while in these locations, and therefore C11 becomes the current cell of MU1, C21 becomes the current cell of MU2, and C31 becomes the current cell of MU3. We assume that N(MU1) = 5, N(MU2) = 4, and N(MU3) = 3. Suppose now that these mobile stations follow the paths depicted in Fig. 3. Then the next current cell of MU1 is C16, the next current cell of MU2 is C25, and the next current cell of MU3 is C34.

The rationale behind this strategy is that if the last cell in which user M has sent an update message is x, then u must be in one of the cells that are in the L-neighborhood of x, where L=N(u). Thus, the search for any mobile station is always restricted to a neighborhood of some cell (which is a small subset of the whole network), while update messages are sent only as a result of specific moves (the number of which is small compared to the total number of moves made by the mobile stations in the network).

The particular selection of the parameter N(u) for each mobile station is crucial, as it determines the efficiency of the strategy. Increasing this parameter clearly decreases the cost of the update operation, as each mobile station will send update messages less often. However, this also increases the cost of the find operation, as the neighborhoods become larger.

Our approach in selecting the value of the parameter N(u) for mobile station u is as follows. Let a(u) be a constant representing the cost incurred by sending one update message by mobile station u, and let b(u) be a constant representing the cost incurred by searching for mobile station u in one cell. For example, a(u) can be chosen such that it reflects the amount of energy consumed from the battery of the mobile station by a transmission of an update message. The constant b(u) can be chosen, for example, such that it reflects the additional load on the wireless link in a cell due to a search for a mobile user in that cell. The exact way by which the values of these constants are determined is irrelevant to the present invention, and is up to the designer of the system. We define the total cost C(u) for user u over the time interval T by C(u) = a(u)M(u) + b(u)F(u), , where M(u) is the number of update messages sent by u during the time interval T, and F(u) is the number of cells in which user u was searched for during this time interval. For example, T could be 1 hour, 1 day, etc.. The exact way by which the value of T is determined by the designer of the system. Clearly, for a given pattern of movements of mobile station u during T, both M(u) and F(u) depend on the value of N(u), and it is straightforward to compute them. The goal is to select a value for N(u) which minimizes the total cost C(u).

A simple way to select the value of N(u) is as follows. The system determines the value of this parameter periodically, every T time units. During each of these time intervals of length T, the system records the history of events regarding mobile station u. The events recorded include the movements of mobile station u and the exact time instants at which the system had to locate this user. At the end of each such time interval of length T, the system calculates by exhaustive search over all possible values of N(u) (the maximum value of which is the number of cells in the network) the value of N(u) which minimizes the cost function C(u). The value of N(u) for the next time interval of length T is set to be this value.

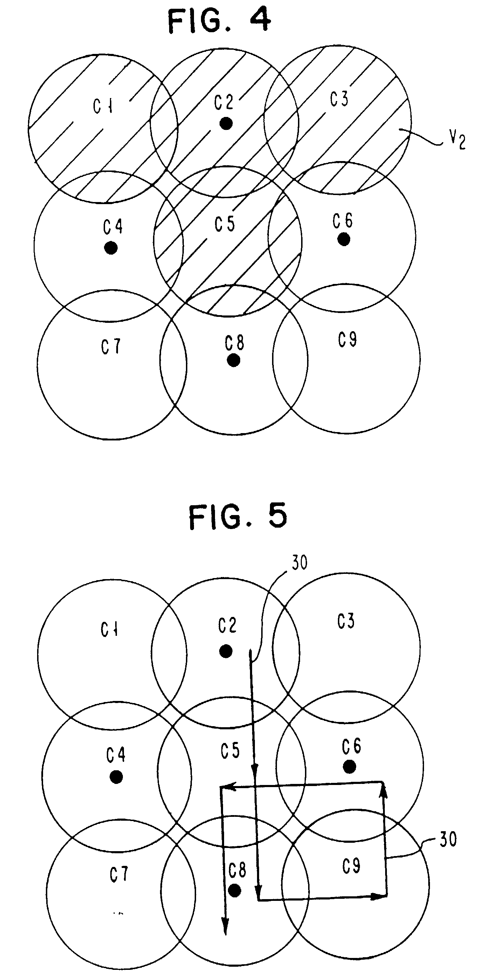

A second basic strategy provided by this invention is as follows and especially described in connection with Figs. 4 to 6. Among all base stations of the network, in accordance to this embodiment, some base stations are selected and designated as *reporting centers*. A cell of a base station which is a reporting center is referred to as a *reporting cell* . The base stations that were designated as reporting centers transmit periodically on the wireless channel a short message which identifies them as such. Thus, each mobile user can learn whether it is in a reporting cell simply by listening to the transmissions of the base stations.

Consider a reporting cell RC1. We define the *vicinity* of cell RC1 to be the collection of all non-reporting cells that are reachable from cell RC1 without crossing another reporting cell. A cell x is said to be reachable from cell y, if there exists a sequence of cells *x* = *x*₀, *x*₁, ... , *x*_{*k*} = *y*, such that the cells *x*_{*i*} and *x*_{*i*}₊₁ are overlapping for all *i* = 0, 1, ... , *k* - 1. By definition, cell RC1 is also considered to be in the vicinity of itself.

Fig. 4 shows an example that demonstrates the notions of reporting centers and vicinities. In this example there are 9 cells denoted by C1,...,C9. Cells C1 and C2 are an example of overlapping cells, whereas cells C1 and C5 are an example of non-overlapping cells. Cells C2,C4,C6,C8 are designated as reporting cells and each vicinity consists of four cells. For example, in the shaded area of Fig. 2, the vicinity V2 of the reporting center C2 consists of cells C1,C2,C3,C5. Note that cell C9, for instance, is not in the vicinity of reporting cell C2 since in order to reach cell C9 from cell C2 a mobile station must cross either the reporting cell C6 or the reporting cell C8. That is, cell C9 is not reachable from cell C2.

The rules for the update and the find operations as defined by the suggested second strategy are as follows.
- **Update**: Each time a mobile user enters a reporting cell, the user transmits an update message to the base station of that cell (which is a reporting center). No update messages are transmitted to base stations that are not reporting centers.
- **Find**: Whenever there is a message to be delivered to a mobile user, this user is searched for in all cells that are in the vicinity of the reporting center to which the mobile station last reported.

The rationale behind this strategy is that if the last reporting center to which a mobile station had sent an update message is *x*, then the user must be in one of the cells that are in the vicinity of *x*. Thus, the search for any user is always restricted to the vicinity of some reporting center (which is a small subset of the whole network), while update messages are sent only from specific cells (the number of which is small compared to the total number of cells in the network).

In Fig. 5 we show an example that demonstrates the tracking strategy. In this example there are 9 cells denoted by C1,...,C9, where cells C2,C4,C6,C8 are designated as reporting cells. Suppose that user MU1 moves along the path 30 consisting of cells C2,C5,C8,C9,C6,C5,C8. Then user MU1 reports initially in cell C2, then when it arrives at cells C8 and C6, and finally again in cell C8. Now assume that the system is looking for MU1 during each one of its two visits to cell C5. In the first visit, the system searches for MU1 in cells C1,C2,C3,C5 since this is the vicinity of cell C2, which is the last reporting center to which MU1 reported. In the second visit, the system searches for MU1 in the vicinity of reporting cell C6 which includes cells C3,C5,C6,C9.

The particular selection of the base stations to be designated as reporting centers determines the efficiency of the strategy. As was seen above, the cost of the find operation is directly related to the sizes of the vicinities. The size of a vicinity is defined as the number of cells in the vicinity. For example, the size of the vicinity of cell C2 is 4 since this vicinity is made up of 4 cells, namely, C1, C2, C3, and C5. The cost of the update operation is related to the number of reporting centers, or more generally, to the "weights' of the reporting centers (as will be explained shortly). Therefore, one would like to select the reporting centers in such a way that both the sizes of the vicinities and the total weight of the reporting centers are minimized. However, these are contradicting goals in general, as in order to decrease the sizes of the vicinities, the number of reporting centers should be increased (and vice versa). In the next section we describe a procedure for selecting the reporting centers, which yields an efficient solution.

The number of update messages that are transmitted during any time interval is the number of times that mobile users enter reporting cells during this time interval. Thus, if we define the *weight* of each cell to be the traffic intensity of mobile users into this cell, then the cost of the update operation is the sum of weights of all reporting cells.

The first step in selecting reporting centers is to associate with each cell *x* a weight *w*(*x*). The exact way in which this step is implemented is irrelevant to the present invention, and is up to the designer of the system. However, each *w*(*x*) should reflect the traffic intensity of mobile users into cell x. For example, *w*(*x*) can be chosen to be the average number of users entering cell *x* during a pre-determined time interval (such as 1 hour, 1 day, etc.). Such average numbers can be easily determined through statistical measurements made by the network during the initial phase of operation. Again, the exact method of calculating average numbers is left as a degree of freedom to the designer of the system.

Our approach in designing an algorithm for selecting reporting centers is the following. The designer of the system has to determine what is the largest size of vicinity *z* that can be tolerated. This determines the maximal time needed to search for any mobile station. The exact way how the number *z* is computed is up to the designer of the system. Once *z* has been determined, the problem is to find a set of reporting centers the total weight of which is minimal, such that the size of every vicinity does not exceed *z*. In what follows we describe an algorithm which yields a near-optimal solution for this problem.

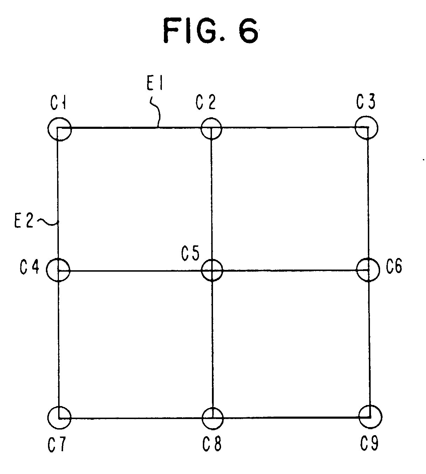

The input to the algorithm is the topology of the network, the weights of the cells, and a parameter *z*. The topology of the network is represented by the interference graph. See Fig. 6. In this graph, the N nodes, labelled C1 through C9, correspond to the cells, C1 through C9, and there is an edge joining between two vertices if and only if the two corresponding cells overlap. For example, in the graph which is the interference graph of the network illustrated in Fig. 5, cell C1 is joined to cell C2 and C4 by a single edge, E1 and E2 respectively, since cell C1 overlaps with both cells C2 and C4. The output of the algorithm is a set of reporting cells such that the size of every vicinity is less than or equal to *z*. The basic idea behind the algorithm is the following. Initially all cells are designated as reporting cells. Then, the cells are considered in an order of decreasing weights, and if making a cell a non-reporting cell does not create a vicinity larger than *z*, then this cell is made a non-reporting cell.

Let the cells of the network be denoted by *C*1, ... , *CN*. Without loss of generality assume that *w*(*C*1)≥*w*(*C*2)≥···≥*w*(*CN*). Let *C* be a set of cells in the network. We define *Z*(*C*) to be the size of the largest vicinity had the set of reporting cells been *C*. The following is a high-level description of the algorithm.
1. *C*: = {*C*1, ... , *CN*}
2. *x*: = 1
3. If *Z*(*C* - {*Cx*}) ≤ *z* then *C*: = *C* - {*Cx*}
4. *x*: = *x* + 1
5. If *x* ≤ *N* then go to step 3
6. Return the set *C*
The algorithm attains a total weight that is at most Δ*z*² times the total weight attained by any optimal algorithm, where Δ is the maximal number of cells that overlap with any particular cell in the network. In practical networks, both Δ and *z* are bounded by small constants. Thus, our solution guarantees a set of centers the total weight of which is within a constant factor of the best possible total weight. Note that this is the worst case; there are networks in which this algorithm produces an optimal solution. Note also that finding an optimal set of centers is a NP-complete problem, and therefore it is very unlikely that there is a simple algorithm (i.e. polynomial time implementation) which yields an optimal set of centers.

### REFERENCES

1. William Lee, "Mobile Cellular Telecommunications Systems," New York: Mcgraw-Hill, 1989
2. Proceedings of IBM Wireless Communications Symposium, Raleigh, N. Carolina, April 22-26, 1991.
3. K. Natarajan, "Distributed Algorithms for Keeping Track of Mobile Users in a Wireless Network System with Multiple Overlapping Cells," IBM Docket YO990-117, Serial No. 605,723, filed October 29, 1990, and assigned to the IBM Corporation, the assignee of this current application.

## Claims

1. A method of tracking a mobile station (MU2) of a cellular network, said method comprising the steps of:
a) reporting a current cell (C12) in which said mobile station (MU2) is located to a base station (BS2) of said network;
b) determining the number of intercellular movements of said mobile station (MU2) since said mobile station arrived in said current cell (C12) in step a);
c) repeating steps a) and b) each time after said mobile station (MU2) makes N(u)+1 intercellular movements,
wherein N(u) is a parameter associated with said mobile station (MU2), and
with a last cell reached on the (N(u)+1)-th intercellular movement being substituted for said current cell; and
d) searching for said mobile station (MU2) in a L-neighborhood (NE1) of said current cell (C12), when communications with said mobile station (MU2) is desired,
with said neighborhood (NE1) being a set of all cells reachable from said current cell (C12) by a path of length ≤ L where L = N(u) ≥ 1.

2. The method as recited in claim 1,
wherein N(u) is determined by selecting the value of N(u) for which C(u) is a minimum,
where C(u) = a(u) M(u) + b(u) F(u),
where a(u) is the cost of sending an update message by said mobile station,
b(u) is the cost incurred by searching for said mobile station in a cell,
M(u) is the number of update messages sent by said mobile station during a time interval T, and
where F(u) is the number of cells in which said mobile station was searched for in a time interval T.

3. The method as recited in claim 1 or 2,
wherein the number of intercellular movements of said mobile station (MU2) is calculated by increasing the value of a counter for each intercellular movement of said user.

4. An apparatus for tracking a mobile station (MU2) of a cellular network, said apparatus comprising:
a) means for reporting a current cell (C12) in which said mobile station (MU2) is located to a base station (BS2) of said network;
b) means for determining the number of intercellular movements of said mobile station (MU2) since said mobile station arrived in said current cell (C12) in step a);
c) means for repeatedly operating said means for reporting and said means for determining each time after said mobile station (MU2) makes N(u)+1 intercellular movements,
wherein N(u) is a parameter associated with said mobile station (MU2), and
with a last cell reached on the (N(u)+1)-th intercellular movement being substituted for said current cell; and
d) means for searching for said mobile station (MU2) in a L-neighborhood (NE1) of said current cell (C12), when communications with said mobile station (MU2) is desired,
with said neighborhood (NE1) being a set of all cells reachable from said current cell (C12) by a path of length ≤ L where L = N(u) ≥ 1.

5. A method of tracking a mobile station (MU2) of a cellular network, said method comprising the steps of:
a. selecting a number of cells of said network to be reporting cells (C2, C4, C6, C8),
said number of cells being less than the total number of cells of said network;
b. sending a reporting signal to a base station from each of said mobile stations each time each said mobile station (MU2) enters one of said reporting cells (C2, C4, C6, C8),
each said reporting signal identifying a location of a corresponding one of said mobile stations, and
c. searching for a mobile station (MU2) in the vicinity (V2) of the last corresponding reporting cell from which said mobile station (MU2) sent a signal, said searching being conducted when communication is desired with said mobile station,
where the vicinity (V2) of said last corresponding reporting cell is the set of all non-reporting cells that are reachable from said reporting cell without entering another reporting cell.

6. An apparatus for tracking mobile stations of a cellular network, especially for performing the method of claim 5, said apparatus comprising:
a. means for selecting a number of cells of said network to be reporting cells (C2, C4, C6, C8),
said number of cells being less than the total number of cells of said network;
b. means for sending a reporting signal to a base station from each of said mobile stations each time each said mobile station (MU2) enters one of said reporting cells (C2, C4, C6, C8),
each said reporting signal identifying a location of a corresponding one of said mobile stations, and
c. means for searching for a mobile station (MU2) in the vicinity (V2) of the last corresponding reporting cell from which said mobile station (MU2) sent a signal, said searching being conducted when communication is desired with said mobile station,
where the vicinity (V2) of said last corresponding reporting cell is the set of all non-reporting cells that are reachable from said reporting cell without entering another reporting cell.

## Patentansprüche

1. Verfahren zur Ortung einer Mobilstation (MU2) eines Zellennetzwerks, wobei das Verfahren die folgenden Schritte umfaßt:
a) Melden einer aktuellen Zelle (C12), in der sich die Mobilstation (MU2) befindet, an eine Basisstation (BS2) des Netzwerks;
b) Feststellen der Anzahl der Bewegungen zwischen Zellen der Mobilstation (MU2), seit die Mobilstation im Schritt a) in der aktuellen Zelle (C12) angekommen ist;
c) Wiederholen der Schritte a) und b) jedesmal, nachdem die Mobilstation (MU2) N(u)+1 Bewegungen zwischen Zellen gemacht hat,
wobei N(u) ein Parameter ist, welcher der Mobilstation (MU2) zugeordnet ist, und
wobei die aktuelle Zelle durch eine letzte Zelle, die bei der (N(u)+1)-ten Bewegung zwischen Zellen erreicht wird, ersetzt wird; und
d) Suchen nach der Mobilstation (MU2) in einer L-Nachbarschaft (NE1) der aktuellen Zelle (C12), wenn eine Kommunikation mit der Mobilstation (MU2) gewünscht wird,
wobei die Nachbarschaft (NE1) eine Gruppe aller Zellen ist, die von der aktuellen Zelle (C12) über einen Pfad der Länge ≤ L erreichbar sind, wobei L = N(u) ≥ 1.

2. Verfahren nach Anspruch 1,
wobei N(u) ermittelt wird, indem der Wert von N(u) ausgewählt wird, für den C(u) ein Minimum ist,
wobei C(u) = a(u) M(u) + b(u) F(u),
wobei a(u) die Kosten für das Senden einer Aktualisierungsnachricht durch die Mobilstation sind,
b(u) die durch die Suche nach der Mobilstation in einer Zelle entstandenen Kosten sind,
M(u) die Anzahl der Aktualisierungsnachrichten ist, die von der Mobilstation während eines Zeitintervalls T gesandt werden, und
wobei F(u) die Anzahl der Zellen ist, in denen nach der Mobilstation in einem Zeitintervall T gesucht wurde.

3. Verfahren nach Anspruch 1 oder 2,
wobei die Anzahl der Bewegungen zwischen Zellen der Mobilstation (MU2) berechnet wird, indem der Wert eines Zählers für jede Bewegung zwischen Zellen des Nutzers erhöht wird.

4. Vorrichtung zur Ortung einer Mobilstation (MU2) eines Zellennetzwerks, wobei die Vorrichtung folgendes umfaßt:
a) Mittel, um eine aktuelle Zelle (C12), in der sich die Mobilstation (MU2) befindet, an eine Basisstation (BS2) des Netzwerks zu melden;
b) Mittel, um die Anzahl der Bewegungen zwischen Zellen der Mobilstation (MU2) festzustellen, seit die Mobilstation im Schritt a) in der aktuellen Zelle (C12) angekommen ist;
c) Mittel, um das Meldemittel und das Feststellungsmittel jedesmal, nachdem die Mobilstation (MU2) N(u)+1 Bewegungen zwischen Zellen gemacht hat, wiederholt in Betrieb zu nehmen,
wobei N(u) ein Parameter ist, welcher der Mobilstation (MU2) zugeordnet ist, und
wobei die aktuelle Zelle durch eine letzte Zelle, die bei der (N(u)+1)-ten Bewegung zwischen Zellen erreicht wird, ersetzt wird; und
d) Mittel, um nach der Mobilstation (MU2) in einer L-Nachbarschaft (NE1) der aktuellen Zelle (C12) zu suchen, wenn eine Kommunikation mit der Mobilstation (MU2) gewünscht wird,
wobei die Nachbarschaft (NE1) eine Gruppe aller Zellen ist, die von der aktuellen Zelle (C12) über einen Pfad der Länge ≤ L erreichbar sind, wobei L = N(u) ≥ 1.

5. Verfahren zur Ortung einer Mobilstation (MU2) eines Zellennetzwerks, wobei das Verfahren die folgenden Schritte umfaßt:
a) Auswählen einer Anzahl von Zellen des Netzwerks als Meldezellen (C2, C4, C6, C8),
wobei die Anzahl der Zellen geringer als die Gesamtzahl der Zellen des Netzwerks ist;
b) jedesmal, wenn jede Mobilstation (MU2) in eine der Meldezellen (C2, C4, C6, C8) eintritt, Senden eines Meldesignals von jeder der Mobilstationen an eine Basisstation,
wobei jedes Meldesignal einen Standort einer entsprechenden der Mobilstationen kennzeichnet, und
c) Suchen nach einer Mobilstation (MU2) in der Nähe (V2) der letzten entsprechenden Meldezelle, von der die Mobilstation (MU2) ein Signal gesandt hat, wobei die Suche durchgeführt wird, wenn eine Kommunikation mit der Mobilstation gewünscht wird,
wobei die Nähe (V2) der letzten entsprechenden Meldezelle die Gruppe ailer Nicht-Meldezellen ist, die von der Meldezelle erreichbar sind, ohne in eine andere Meldezelle einzutreten.

6. Vorrichtung zur Ortung von Mobilstationen eines Zellennetzwerks, insbesondere zur Durchführung des Verfahrens nach Anspruch 5, wobei die Vorrichtung folgendes umfaßt:
a) Mittel, um eine Anzahl von Zellen des Netzwerks als Meldezellen (C2, C4, C6, C8) auszuwählen,
wobei die Anzahl der Zellen geringer als die Gesamtzahl der Zellen des Netzwerks ist;
b) Mittel, um jedesmal, wenn jede Mobilstation (MU2) in eine der Meldezellen (C2, C4, C6, C8) eintritt, von jeder der Mobilstationen ein Meldesignal an eine Basisstation zu senden,
wobei jedes Meldesignal einen Standort einer entsprechenden der Mobilstationen kennzeichnet, und
c) Mittel, um nach einer Mobilstation (MU2) in der Nähe (V2) der letzten entsprechenden Meldezelle zu suchen, von der die Mobilstation (MU2) ein Signal gesandt hat, wobei die Suche durchgeführt wird, wenn eine Kommunikation mit der Mobilstation gewünscht wird,
wobei die Nähe (V2) der letzten entsprechenden Meldezelle die Gruppe aller Nicht-Meldezellen ist, die von der Meldezelle erreichbar sind, ohne in eine andere Meldezelle einzutreten.

## Revendications

1. Méthode de localisation d'une station mobile (MU2) d'un réseau cellulaire, ladite méthode comprenant les phases qui consistent à:
a) signaler, à une station de base (BS2) du dit réseau, dans quelle cellule (C12) ladite station mobile (MU2) se trouve à ce moment;
b) déterminer le nombre de déplacements intercellulaires de ladite station mobile (MU2) depuis que ladite station est arrivée dans ladite cellule courante (C12) dans la phase a);
c) répéter à chaque fois les phases a) et b), après que ladite station mobile (MU2) aura fait N(u) + 1 déplacements cellulaires,
où N(u) est un paramètre associé à ladite station mobile (MU2), et
la dernière cellule atteinte lors du (N(u) + 1)^{ème} déplacement intercellulaire étant substituée à ladite cellule courante; et
d) chercher ladite station mobile (MU2) dans un L-voisinage (NE 1) de ladite cellule courante (C12), quand ont désire établir une communication avec ladite station mobile (MU2),
ledit voisinage (NE1) étant un ensemble de toutes les cellules pouvant être atteintes à partir de ladite cellule courante (C12) par un chemin de longueur ≤ L, où L = N (u) ≥ 1.

2. Méthode selon la revendication 1,
où N (u) est déterminé en choisissant la valeur de N (u) pour laquelle C (u) est un minimum,
où C (u) = a (u) M (u) + b (u) F (u),
où a (u) est le coût d'envoi d'un message de mise ajour par ladite station mobile,
b (u) est le coût prévisible de recherche de ladite station mobile dans une cellule,
M (u) est le nombre de messages de mise à jour envoyés par ladite station mobile pendant un intervalle de temps T, et
où F (u) est le nombre de cellules dans lesquelles ladite station mobile a été cherchée pendant un intervalle de temps T.

3. Méthode selon la revendication 1 ou 2,
où le nombre de déplacements intercellulaires de ladite station mobile (MU2) est calculé en augmentant la valeur d'un compteur à chaque déplacement intecellulaire du dit utilisateur.

4. Appareil pour localiser une station mobile (MU2) d'un réseau cellulaire, ledit appareil comprenant:
a) un moyen pour signaler à une station de base (BS2) du dit réseau, une cellule courante (C12) dans laquelle ladite station mobile (MU2) se trouve;
b) un moyen pour déterminer le nombre de déplacements intercellulaires de ladite station mobile (MU2) depuis que ladite station est arrivée dans ladite cellule courante (C12) dans la phase a);
c) un moyen pour faire fonctionner de manière répétée ledit moyen signalisation et ledit moyen de détermination à chaque reprise, après que ladite station mobile (MU2) a fait N (u) + 1 déplacements cellulaires,
où N (u) est un paramètre associé à ladite station mobile (MU2), et
une dernière cellule atteinte lors du (N(u) + 1) ^{ème} déplacement intercellulaire étant substituée à ladite cellule courante; et
d) un moyen pour chercher ladite station mobile (MU2) dans un L-voisinage (NE1) de ladite cellule courante (C12), quand ont désire établir une transmission avec ladite station mobile (MU2),
ledit voisinage (NE1) étant l'ensemble de toutes les cellules pouvant être atteintes à partir de ladite cellule courante (C12) par un chemin de longueur ≤ L où L = N(u) ≥ 1.

5. Méthode de localisation d'une station mobile (MU2) d'un réseau cellulaire, ladite méthode comprenant les phases qui consistent à:
a) sélectionner un certain nombre de cellules du dit réseau qui seront des cellules de signalisation (C2, C4, C6, C8),
ledit nombre de cellules étant inférieur au nombre total des cellules présentes dans ledit réseau;
b) envoyer un signal de signalisation à une station de base, à partir de chacune des dites stations mobiles, à chaque fois que l'une des dites stations mobiles (MU2) entre dans l'une des dites cellules de signalisation (C2, C4, C6, C8),
chacun des dits signaux de signalisation identifiant un emplacement d'une station mobile correspondante, et
c) chercher une station mobile (MU2) dans le voisinage (V2) de la dernière cellule de signalisation correspondante à partir de laquelle ladite station mobile (MU2) a envoyé un signal, ladite recherche étant couduite quand on souhaite communiquer avec ladite station mobile,
où le voisinage (V2) de ladite dernière cellule de signalisation correspondante est l'ensemble de toutes les cellules qui ne sont pas des cellules de signalisation et qui peuvent être atteintes à partir de ladite cellule de signalisation sans pénétrer dans une autre cellule de signalisation.

6. Appareil pour localiser les stations mobiles d'un réseau cellulaire, particulièrement pour exécuter la méthode exposée dans la revendication 5, ledit appareil comprenant:
a) un moyen pour sélectionner un certain nombre de cellules du dit réseau qui seront des cellules de signalisation (C2, C4, C6, C8),
ledit nombre de cellules étant inférieur au nombre total de cellules du dit réseau;
b) un moyen pour envoyer un signal de signalisation à une station de base à partir de chacune des dites stations mobiles à chaque fois qu'une (MU2) des dites stations mobiles entre dans l'une des dites cellules de signalisation (C2, C4, C6, C8),
chacun des dits signaux de signalisation identifiant un emplacement d'une station mobile correspondante, et
c) un moyen pour rechercher une station mobile (MU2) dans le voisinage (V2) de la dernière cellule de signalisation correspondante à partir de laquelle ladite station mobile (MU2) a envoyé un signal, ladite recherche étant couduite quand on souhaite communiquer avec ladite station mobile,
où le voisinage (V2) de ladite dernière cellule de signalisation correspondante est l'ensemble de toutes les cellules qui ne sont pas des cellules de signalisation et qui peuvent être atteintes à partir de ladite cellule de signalisation sans entrer dans une autre cellule de signalisation.
